# EUROPEAN PATENT APPLICATION

(11) **EP 3 010 279 A1**
(43) Date of publication of application: **20.04.2016**
(21) Application number: 13886697.5
(22) Date of filing: 13.06.2013
(51) Int. Cl.: H04W 36/00

(54) **METHOD, DEVICE, AND SYSTEM FOR NETWORK HANDOVER**

(71) Applicant: Huawei Technologies Co., Ltd., Longgang District Shenzhen, Guangdong 518129 (CN)
(72) Inventor: WU, Xiaobo, Shenzhen Guangdong 518129 (CN); ZOU, Ye, Shenzhen Guangdong 518129 (CN); ZHANG, Daliang, Shenzhen Guangdong 518129 (CN)
(74) Representative: Isarpatent
(86) International application number: PCT/CN2013/077195
(87) International publication number: WO 2014/198046

(57) **Abstract**

The present invention discloses a network handover method. After receiving a request message that requests circuit switched fallback CSFB and is initiated by a UE located in an LTE network, an MME instructs an eNB to move the UE from the LTE network to a 2G or 3G network, requests an MSC to hand over the UE from the LTE network to a CS domain of the 2G or 3G network; and requests an SGSN to initiate a handover from the LTE network to a packet switched PS domain of the 2G or 3G network; the MME sends a handover requirement response message to the eNB, where the handover requirement response message includes the PS domain RAB, so that the PS domain RAB is sent by the eNB to the UE. Therefore, the UE can be handed over to the PS domain of the 2G or 3G network in a manner of being handed over from the LTE network to the CS domain of the 2G or 3G network. After being handed over to the PS domain, the UE can make a CS domain call, which can shorten a time of a voice call connection.

## Description

### TECHNICAL FIELD

The present invention relates to the field of communications technologies, and specifically, to a network handover method, device, and system.

### BACKGROUND

Full coverage of a second generation (Second Generation, 2G) or third generation (Third Generation, 3G) network such as Global System for Mobile Communications (Global System of Mobile communication, GSM) or Wideband Code Division Multiple Access (Wideband Code Division Multiple Access, WCDMA) has been basically implemented.

With the development of network technologies such as System Architecture Evolution (System Architect Evolution, SAE) and Long Term Evolution (Long Term Evolution, LTE) in a fourth generation (Fourth Generation, 4G) network, and with the development of an enhanced High Speed Uplink Packet Access (High Speed Uplink Packet Access, HSPA) technology, a High Speed Downlink Packet Access (High Speed Downlink Packet Access, HSPA+) technology, and a Worldwide Interoperability for Microwave Access (Worldwide Interoperability for Microwave Access, WiMax) network technology, the 4G networks or enhanced 3G networks have covered some urban areas and traffic hotspot areas. In this way, in current communications networks, the 4G networks and the enhanced 3G networks coexist with 2G or 3G networks.

Both 2G and 3G networks use a circuit switched (Circuit Switched, CS) domain to bear session services such as voice calls, but 4G or enhanced 3G networks use a packet switched (Packet Switch, PS) domain to bear session services.

Circuit switched fallback (Circuit Switched Fallback, CSFB) means that when processing a voice service, user equipment (User Equipment, UE) covered by LTE falls back to a CS domain network first, and processes the voice service in the CS domain network. In this way, an objective of reusing an existing CS domain device to provide a conventional voice service for a user in an LTE network is fulfilled.

In the prior art, when a UE supports only a handover from an LTE network to a PS domain of a 2G or 3G network, a network triggers a handover process of the handover from the LTE network to the PS domain of the 2G or 3G network, and reserves a PS-related resource, and then the UE can initiate a voice call in the PS domain. However, in an implementation solution in the prior art in which the UE initiates a voice call after being handed over to the PS domain of the 2G or 3G network, the entire voice call connection consumes a relatively long time, which leads to poor user experience.

### SUMMARY

When a UE supports only a handover from an LTE network to a PS domain of a 2G or 3G network, a network does not trigger a handover process of the handover from the LTE network to the PS domain of the 2G or 3G network, and therefore, does not reserve a CS-related resource, and in this way, an entire voice call connection consumes a relatively long time.

Embodiments of the present invention provide a network handover method. For a terminal that supports only a PS domain bearer, a network triggers both a handover from an LTE network to a CS domain of a 2G or 3G network and a handover from the LTE network to a PS domain of the 2G or 3G network. By means of the handover from the LTE network to the PS of the 2G or 3G network, user equipment is handed over to the 2G or 3G network. The embodiments of the present invention further provide a corresponding device and a corresponding system. The LTE network mentioned in the present invention includes an LTE A network and subsequent possible LTE versions.

According to a first aspect, the present invention provides a network handover method, including:
receiving, by a mobility management entity MME, a request message initiated by user equipment UE located in a Long Term Evolution LTE network, where the request message is used to request circuit switched fallback CSFB;
sending, by the MME, a first notification message to an evolved NodeB eNB according to the request message, where the first notification message is used to instruct the eNB to move the UE from the LTE network to a 2G or 3G network for the CSFB;
receiving, by the MME, a handover requirement message sent by the eNB;
sending, by the MME, a first handover request message to a mobile switching center MSC, where the first handover request message is used to request the MSC to hand over the UE from the LTE network to a circuit switched CS domain of the 2G or 3G network for the CSFB;
sending, by the MME, a second handover request message to a serving general packet radio service support node device SGSN, where the second handover request message is used to request the SGSN to initiate a handover from the LTE network to a packet switched PS domain of the 2G or 3G network;
receiving, by the MME, a second handover request response message sent by the SGSN, where the second handover request response message includes a PS domain radio access bearer RAB, and the PS domain RAB is used to hand over the UE from the LTE network to the packet switched PS domain of the 2G or 3G network; and
sending, by the MME, a handover requirement response message to the eNB according to the second handover request response message, where the handover requirement response message includes the PS domain RAB, so that the PS domain RAB is sent by the eNB to the UE.

With reference to the first aspect, in a first possible implementation manner,
the first handover request message is further used to indicate that the UE supports the handover from the LTE network to the PS domain of the 2G or 3G network.

With reference to the first aspect or the first possible implementation manner of the first aspect, in a second possible implementation manner,
the handover requirement message includes first indication information, where the first indication information is used to instruct the MME to hand over the UE from the LTE network to the CS domain of the 2G or 3G network for the CSFB, or the first indication information is used to request the MME to hand over the UE from the LTE network to the CS domain of the 2G or 3G network for the CSFB and is used to indicate that the UE supports the handover from the LTE network to the PS domain of the 2G or 3G network.

With reference to the first aspect or the first or the second possible implementation manner of the first aspect, in a third possible implementation manner, the method further includes:
receiving, by the MME, a first handover request response message sent by the MSC.

According to a second aspect, the present invention provides a network handover method, including:
receiving, by a mobile switching center MSC, a first handover request message sent by a mobility management entity MME, where the first handover request message is used to request the MSC to hand over user equipment UE from a Long Term Evolution LTE network to a circuit switched CS domain of a 2G or 3G network for circuit switched fallback CSFB;
sending, by the MSC, a third handover request message to a base station of the 2G or 3G network, where the third handover request message is used to request the base station to hand over the UE from the LTE network to the CS domain of the 2G or 3G network for the CSFB;
receiving, by the MSC, a third handover request acknowledgement message sent by the base station of the 2G or 3G network; and
receiving, by the MSC, a handover complete message sent by the base station, where the handover complete message is used to indicate that the UE has completed the handover from the LTE network to the CS domain of the 2G or 3G network.

With reference to the second aspect, in a first possible implementation manner, the method further includes:
receiving, by the MSC, a first CS call connection request message sent by the UE, where the MSC generates a first session for the UE.

With reference to the first possible implementation manner of the second aspect, in a second possible implementation manner, the method further includes:
sending, by the MSC, a second notification message to the base station after receiving at least one of the following messages, where the second notification message is used to request the base station to allocate a CS domain resource to the UE, where
the following messages include the handover complete message, a connection management service request message sent by the UE, the first CS call connection request message, and a paging response message sent by the UE.

With reference to the second aspect, in a third possible implementation manner, the method further includes:
sending, by the MSC, a second CS call connection request message to the UE, where the second CS call connection request message is used to request the UE to generate a second session.

With reference to the third possible implementation manner of the second aspect, in a fourth possible implementation manner, the method further includes:
sending, by the MSC, a second notification message to the base station after sending the second CS call connection request message, where the second notification message is used to request the base station to allocate a CS domain resource to the UE.

With reference to the second aspect or any one of the first to the fourth possible implementation manners of the second aspect, in a fifth possible implementation manner,
the third handover request message is further used to indicate that the UE supports a handover from the LTE network to a packet switched PS domain of the 2G or 3G network; and/or
the first handover request message is further used to indicate that the UE supports a handover from the LTE network to a packet switched PS domain of the 2G or 3G network.

According to a third aspect, the present invention provides a network handover method, including:
receiving, by a base station of a 2G or 3G network, a third handover request message sent by a mobile switching center MSC, where the third handover request message is used to request the base station to hand over user equipment UE from a Long Term Evolution LTE network to a circuit switched CS domain of the 2G or 3G network for circuit switched fallback CSFB;
receiving, by the base station, a fourth handover request message sent by a serving general packet radio service support node device SGSN, where the fourth handover request message is used to request the base station to hand over the UE from the LTE network to a packet switched PS domain of the 2G or 3G network for the CSFB;
sending, by the base station, a third handover request acknowledgement message to the MSC;
sending, by the base station, a fourth handover request acknowledgement message to the SGSN, where the fourth handover request acknowledgement message includes a PS domain RAB, and the PS domain RAB is used to hand over the UE from the LTE network to the PS domain of the 2G or 3G network for the CSFB;
receiving, by the base station, a handover complete message sent by the UE; and
sending, by the base station, a third notification message to the UE, where the third notification message includes a CS domain RAB allocated by the base station to the UE.

With reference to the third aspect, in a first possible implementation manner,
the third handover request message is further used to indicate that the UE supports the handover from the LTE network to the PS domain of the 2G or 3G network; and/or
the fourth handover request message is further used to indicate that the UE supports the handover from the LTE network to the PS domain of the 2G or 3G network.

With reference to the third aspect or the first possible implementation manner of the third aspect, in a second possible implementation manner,
the base station sends the second notification message to the UE after the base station receives a call setup message or a call acknowledgement message sent by the UE; or
the base station sends the second notification message to the UE after the base station receives a call proceeding message sent by the MSC.

With reference to the third aspect or the first or the second possible implementation manner of the third aspect, in a third possible implementation manner, the method further includes: after the base station receives the handover complete message,
sending, by the base station, universal mobile telecommunications system terrestrial radio access network UTRAN mobility information to the UE, where the UTRAN mobility information does not include a location area identity LAI; and sending, by the base station, the LAI to the UE after a preset time; or
sending, by the base station, UTRAN mobility information to the UE, where the UTRAN mobility information does not include a location area identity LAI, and sending, by the base station, the LAI to the UE after receiving a call release command sent by the MSC, a call connection success message sent by the MSC, or a call connection success message sent by the UE.

With reference to the third aspect or any one of the first to the third possible implementation manners of the third aspect, in a fourth possible implementation manner, the method further includes:
receiving, by the base station, a location update request message sent by the UE; and
sending, by the base station, a location update accept message to the UE, and skipping sending, by the base station, the location update request message to the MSC.

With reference to the third aspect or any one of the first to the fourth possible implementation manners of the third aspect, in a fifth possible implementation manner, the method further includes:
receiving, by the base station, a call release message sent by the MSC; and
redirecting, by the base station, the UE to the LTE network according to the call release message, or handing over, by the base station, the UE to the LTE network according to the call release message.

According to a fourth aspect, the present invention provides a network handover method, including:
receiving, by an evolved NodeB eNB located in a Long Term Evolution LTE network, a first notification message sent by a mobility management entity MME, where the first notification message is used to instruct the eNB to move user equipment UE from the LTE network to a 2G or 3G network for circuit switched fallback CSFB;
sending, by the eNB, a handover requirement message to the MME, where the handover requirement message is used to request the MME to hand over the UE from the LTE network to a circuit switched CS domain of the 2G or 3G network for the CSFB;
receiving, by the eNB, a handover requirement response message sent by the MME, where the handover requirement response message includes a packet switched PS domain radio access bearer RAB, and the PS domain RAB is used to hand over the UE from the LTE network to a PS domain of the 2G or 3G network for the CSFB; and
sending, by the eNB, a handover command to the UE, where the handover command includes the PS domain RAB.

With reference to the fourth aspect, in a first possible implementation manner, the first notification message is further used to indicate that the LTE network and the 2G or 3G network support the handover of the UE from the LTE network to the circuit switched CS domain of the 2G or 3G network for the CSFB.

With reference to the fourth aspect or the first possible implementation manner of the fourth aspect, in a second possible implementation manner, the method further includes:
the handover requirement message includes one piece of indication information, where the piece of indication information is used to request the MME to hand over the UE from the LTE network to the CS domain of the 2G or 3G network for the CSFB; or
the piece of indication information is used to request the MME to hand over the UE from the LTE network to the CS domain of the 2G or 3G network for the CSFB and is used to indicate that the UE supports the handover from the LTE network to the PS domain of the 2G or 3G network; or
a source-to-target container in the handover requirement message includes another piece of indication information, where the another piece of indication information is used to request a base station of the 2G or 3G network to hand over the UE from the LTE network to the CS domain of the 2G or 3G network for the CSFB; or
a source-to-target container in the handover requirement message includes another piece of indication information, where the another piece of indication information is used to request a base station of the 2G or 3G network to hand over the UE from the LTE network to the CS domain of the 2G or 3G network for the CSFB and is used to indicate that the UE supports the handover from the LTE network to the PS domain of the 2G or 3G network.

With reference to the fourth aspect or the first or the second possible implementation manner of the fourth aspect, in a third possible implementation manner, the method further includes:
before the eNB sends the handover requirement message to the MME, determining, by the eNB, that the UE supports the handover from the LTE network to the PS domain of the 2G or 3G network; and/or
before the eNB sends the handover command to the UE, determining, by the eNB, that the UE supports the handover from the LTE network to the PS domain of the 2G or 3G network.

According to a fifth aspect, the present invention provides a mobility management entity, including:
a receiving unit, configured to receive a request message initiated by user equipment UE located in a Long Term Evolution LTE network, where the request message is used to request circuit switched fallback CSFB;
a generating unit, configured to generate a first notification message according to the request message received by the receiving unit, where the first notification message is used to instruct an evolved NodeB eNB to move the UE from the LTE network to a 2G or 3G network for the CSFB; and
a sending unit, configured to send, to the eNB, the first notification message generated by the generating unit; where
the receiving unit is further configured to receive a handover requirement message sent by the eNB;
the generating unit is further configured to generate a first handover request message and a second handover request message according to the handover requirement message received by the receiving unit, where the first handover request message is used to request the MSC to hand over the UE from the LTE network to a circuit switched CS domain of the 2G or 3G network for the CSFB, and the second handover request message is used to request the SGSN to initiate a handover from the LTE network to a packet switched PS domain of the 2G or 3G network;
the sending unit is further configured to: send, to the mobile switching center MSC, the first handover request message generated by the generating unit and send, to the serving general packet radio service support node device SGSN, the second handover request message generated by the generating unit;
the receiving unit is further configured to receive a second handover request response message sent by the SGSN, where the second handover request response message includes a PS domain RAB, and the PS domain RAB is used to hand over the UE from the LTE network to the PS domain of the 2G or 3G network;
the generating unit is further configured to generate a handover requirement response message according to the second handover request response message received by the receiving unit, where the handover requirement response message includes the PS domain RAB; and
the sending unit is further configured to send, to the eNB, the handover requirement response message generated by the generating unit, where the handover requirement response message includes the PS domain RAB, so that the PS domain RAB is sent by the eNB to the UE.

With reference to the fifth aspect, in a first possible implementation manner,
the first handover request message is further used to indicate that the UE supports the handover from the LTE network to the PS domain of the 2G or 3G network.

With reference to the fifth aspect or the first possible implementation manner of the fifth aspect, in a second possible implementation manner,
the handover requirement message includes first indication information, where
the first indication information is used to instruct the MME to hand over the UE from the LTE network to the CS domain of the 2G or 3G network for the CSFB; or
the first indication information is used to request the MME to hand over the UE from the LTE network to the CS domain of the 2G or 3G network for the CSFB and is used to indicate that the UE supports the handover from the LTE network to the PS domain of the 2G or 3G network.

With reference to the fifth aspect or the first or the second possible implementation manner of the fifth aspect, in a third possible implementation manner,
the receiving unit is further configured to receive a first handover request response message sent by the MSC.

According to a sixth aspect, the present invention provides a mobile switching center MSC, including:
a receiving unit, configured to receive a first handover request message sent by a mobility management entity MME, where the first handover request message is used to request the MSC to hand over user equipment UE from a Long Term Evolution LTE network to a circuit switched CS domain of a 2G or 3G network for circuit switched fallback CSFB;
a generating unit, configured to generate a third handover request message according to the first handover request message received by the receiving unit, where the third handover request message is used to request a base station of the 2G or 3G network to hand over the UE from the LTE network to the CS domain of the 2G or 3G network for the CSFB; and
a sending unit, configured to send, to the base station, the third handover request message generated by the generating unit; where
the receiving unit is further configured to receive a third handover request acknowledgement message sent by the base station; and
the receiving unit is further configured to receive a handover complete message sent by the base station, where the handover complete message is used to indicate that the UE has completed the handover from the LTE network to the CS domain of the 2G or 3G network.

With reference to the sixth aspect, in a first possible implementation manner,
the receiving unit is further configured to receive a first CS call connection request message sent by the UE; and
the generating unit is further configured to generate a first session for the UE.

With reference to the sixth aspect, in a second possible implementation manner,
the sending unit is further configured to send, to the UE, a second CS call connection request message generated by the generating unit, where the second CS call connection request message is used to request the UE to generate a second session.

With reference to the first possible implementation manner of the sixth aspect, in a third possible implementation manner,
the receiving unit is further configured to receive a connection management service request message sent by the UE, a paging response message sent by the UE; and
the sending unit is further configured to send a second notification message generated by the generating unit to the base station after the receiving unit receives at least one of the following messages, where the second notification message is used to request the base station to allocate a CS domain resource to the UE, and the following messages include: the handover complete message, the connection management service request message sent by the UE, the first CS call connection request message, and the paging response message sent by the UE.

With reference to the second possible implementation manner of the sixth aspect, in a fourth possible implementation manner,
the sending unit is further configured to send a second notification message generated by the generating unit to the base station after the sending unit sends the second CS call connection request message, where the second notification message is used to request the base station to allocate a CS domain resource to the UE.

According to a seventh aspect, the present invention provides a base station of a 2G or 3G network, including:
a receiving unit, configured to receive a third handover request message sent by a mobile switching center MSC, where the third handover request message is used to request the base station to hand over user equipment UE from a Long Term Evolution LTE network to a circuit switched CS domain of the 2G or 3G network for circuit switched fallback CSFB; and further configured to receive a fourth handover request message sent by a serving general packet radio service support node device SGSN, where the fourth handover request message is used to request the base station to hand over the UE from the LTE network to a packet switched PS domain of the 2G or 3G network for the CSFB;
an allocating unit, configured to allocate a PS domain RAB to the UE according to the fourth handover request message received by the receiving unit, where the PS domain RAB is used to hand over the UE from the LTE network to the packet switched PS domain of the 2G or 3G network for the circuit switched fallback CSFB;
a generating unit, configured to: generate a third handover request acknowledgement message according to the third handover request message received by the receiving unit, and generate a fourth handover request acknowledgement message according to the fourth handover request message received by the receiving unit, where the fourth handover request acknowledgement message includes the PS domain radio access bearer RAB, and the PS domain RAB is used to hand over the UE from the LTE network to the packet switched PS domain of the 2G or 3G network for the CSFB; and
a sending unit, configured to: send, to the MSC, the third handover request acknowledgement message generated by the generating unit and send, to the SGSN, the fourth handover request acknowledgement message generated by the generating unit; where
the receiving unit is further configured to receive a handover complete message sent by the UE;
the allocating unit is further configured to allocate a CS domain RAB to the UE according to the third handover request message received by the receiving unit;
the generating unit is further configured to: generate a third notification message according to the handover complete message received by the receiving unit, to send the third notification message to the UE, where the third notification message includes the CS domain RAB; and
the sending unit is further configured to send, to the UE, the third notification message generated by the generating unit.

With reference to the seventh aspect, in a first possible implementation manner,
the third handover request message is further used to indicate that the UE supports the handover from the LTE network to the PS domain of the 2G or 3G network.

With reference to the seventh aspect or the first possible implementation manner of the seventh aspect, in a second possible implementation manner,
the receiving unit is further configured to: receive a call setup message or a call acknowledgement message sent by the UE, or receive a call proceeding message sent by the MSC; and
the sending unit sends the third notification message to the UE after the receiving unit receives the call setup message or the call acknowledgement message sent by the UE, or after the receiving unit receives the call proceeding message sent by the MSC.

With reference to the seventh aspect or the first or the second possible implementation manner of the seventh aspect, in a third possible implementation manner,
the sending unit is further configured to: send universal mobile telecommunications system terrestrial radio access network UTRAN mobility information to the UE after the receiving unit receives the handover complete message, where the UTRAN mobility information does not include a location area identity LAI; and send the LAI to the UE after a preset time.

With reference to the seventh aspect or the first possible implementation manner of the seventh aspect, in a fourth possible implementation manner, the sending unit is further configured to send universal mobile telecommunications system terrestrial radio access network UTRAN mobility information to the UE after the receiving unit receives the handover complete message, where the UTRAN mobility information does not include a location area identity LAI;
the receiving unit is further configured to receive a call release command sent by the MSC, a call connection success message sent by the MSC, or a call connection success message sent by the UE; and
the sending unit is further configured to send the LAI to the UE after the receiving unit receives the call release command or the call connection success message.

With reference to the seventh aspect or the first to the fourth possible implementation manner of the seventh aspect, in a fifth possible implementation manner,
the receiving unit is further configured to receive a location update request message sent by the UE;
the base station further includes a determining unit, where the determining unit is configured to determine not to send the location update request message to the MSC; and
the sending unit is further configured to send a location update accept message to the UE.

With reference to the seventh aspect or the first to the fifth possible implementation manners of the seventh aspect, in a sixth possible implementation manner,
the receiving unit is further configured to receive a call release message sent by the MSC; and
the base station further includes a redirecting unit or a handover unit, where
the redirecting unit is configured to redirect the UE to the LTE network according to the call release message; and
the handover unit is configured to hand over the UE to the LTE network according to the call release message.

According to an eighth aspect, the present invention provides an evolved NodeB eNB, including:
a receiving unit, configured to receive a first notification message sent by a mobility management entity MME, where the first notification message is used to instruct the eNB to move user equipment UE from a Long Term Evolution LTE network to a 2G or 3G network for circuit switched fallback CSFB;
a generating unit, configured to generate a handover requirement message according to the first notification message received by the receiving unit, where the handover requirement message is used to request the MME to hand over the UE from the LTE network to a circuit switched CS domain of the 2G or 3G network for the CSFB; and
a sending unit, configured to send, to the MME, the handover requirement message generated by the generating unit; where
the receiving unit is further configured to receive a handover requirement response message sent by the MME, where the handover requirement response message includes a packet switched PS domain radio access bearer RAB, and the PS domain RAB is used to hand over the UE from the LTE network to a PS domain of the 2G or 3G network for the CSFB;
the generating unit is further configured to generate a handover command according to the first notification message received by the receiving unit, where the handover command includes the PS domain RAB; and
the sending unit is further configured to send, to the UE, the handover command generated by the generating unit.

With reference to the eighth aspect, in a first possible implementation manner,
the first notification message is further used to indicate that the LTE network and the 2G or 3G network support the handover of the UE from the LTE network to the circuit switched CS domain of the 2G or 3G network for the CSFB.

With reference to the eighth aspect or the first possible implementation manner of the eighth aspect, in a second possible implementation manner,
the handover requirement message includes a piece of indication information, where
the piece of indication information is used to instruct the MME to hand over the UE from the LTE network to the CS domain of the 2G or 3G network for the CSFB; or
the piece of indication information is used to request the MME to hand over the UE from the LTE network to the CS domain of the 2G or 3G network for the CSFB and is used to indicate that the UE supports the handover from the LTE network to the PS domain of the 2G or 3G network; or
a source-to-target container in the handover requirement message includes another piece of indication information, where the another piece of indication information is used to request a base station of the 2G or 3G network to hand over the UE from the LTE network to the CS domain of the 2G or 3G network for the CSFB; or
a source-to-target container in the handover requirement message includes fifth indication information, where the another piece of indication information is used to request a base station of the 2G or 3G network to hand over the UE from the LTE network to the CS domain of the 2G or 3G network for the CSFB and is used to indicate that the UE supports the handover from the LTE network to the PS domain of the 2G or 3G network.

With reference to the eighth aspect, or the first or the second possible implementation manner of the eighth aspect, in a third possible implementation manner, the evolved NodeB further includes:
a determining unit, configured to: before the sending unit sends the handover requirement message to the MME, determine that the UE supports the handover from the LTE network to the PS domain of the 2G or 3G network; and/or before the sending unit sends the handover command to the UE, determine that the UE supports the handover from the LTE network to the PS domain of the 2G or 3G network.

According to a ninth aspect, the present invention provides a network handover system, including a mobility management entity, an evolved NodeB, a mobile switching center, a base station, and user equipment, where
the mobility management entity is the mobility management entity according to the foregoing technical solution;
the mobile switching center is the mobile switching center according to the foregoing technical solution;
the base station is the base station according to the foregoing technical solution; and
the evolved NodeB is the evolved NodeB according to the foregoing technical solution.

In contrast with the prior art, according to the method provided in the embodiments of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance. After being handed over to the PS domain, the UE can make a CS domain call, which shortens a time of a voice call connection.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1A and FIG. 1B are schematic diagrams of an embodiment of a network handover method according to an embodiment of the present invention;
FIG. 2A and FIG. 2B are schematic diagrams of another embodiment of a network handover method according to an embodiment of the present invention;
FIG. 3 is a schematic diagram of another embodiment of a network handover method according to an embodiment of the present invention;
FIG. 4 is a schematic diagram of another embodiment of a network handover method according to an embodiment of the present invention;
FIG. 5 is a schematic diagram of another embodiment of a network handover method according to an embodiment of the present invention;
FIG. 6 is a schematic diagram of another embodiment of a network handover method according to an embodiment of the present invention;
FIG. 7 is a schematic diagram of an embodiment of a mobility management entity according to an embodiment of the present invention;
FIG. 8 is a schematic diagram of an embodiment of a mobile switching center according to an embodiment of the present invention;
FIG. 9 is a schematic diagram of an embodiment of a base station according to an embodiment of the present invention;
FIG. 10 is a schematic diagram of another embodiment of an evolved NodeB according to an embodiment of the present invention; and
FIG. 11 is a schematic diagram of an embodiment of a network system according to an embodiment of the present invention.

### DESCRIPTION OF EMBODIMENTS

Embodiments of the present invention provide a network handover method. For user equipment that supports only a PS domain bearer, a network triggers both a handover from an LTE network to a CS domain of a 2G or 3G network and a handover from the LTE network to a PS domain of the 2G or 3G network. By means of the handover from the LTE network to the PS of the 2G or 3G network, the user equipment is handed over to the 2G or 3G network. In addition, a network can prepare a voice resource for the CS domain of the 2G or 3G network for the UE in advance, so as to shorten a time of an entire voice call connection, thereby improving user experience. The embodiments of the present invention further provide a corresponding device and a corresponding system, which are separately described in detail in the following.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

Chinese-English versions and acronyms of some related communications terms in the embodiments of the present invention include: mobility management entity (Mobile Managenment Entity, MME), evolved NodeB (Envolved NodeB, eNB), user equipment (User Equipment, UE), mobile switching center (Mobile Services Switching Centre, MSC), the 2nd generation or 3rd generation mobile communications technology (2rd Generation/3rd Generation, 2G or 3G), and base station (Base Station, BS), where the base station in the embodiments of the present invention includes a base station controller (Base Station Controller, BSC) and a radio network controller (Radio Network Controller, RNC), Long Term Evolution (Long Term Evolution, LTE), serving GPRS support node (Serving GPRS Support Node, SGSN), circuit switched fallback (Circuit Switched Fallback, CSFB), terrestrial radio access network (Terrestrial Radio Access Network, UTRAN), Global System for Mobile communications (Global System of Mobile communication, GSM), Enhanced Data rates for GSM Evolution (Enhanced Data Rate for GSM Evolution, EDGE), and Global System for Mobile communications/Enhanced Data rates for GSM Evolution radio access network (GSM/EDGE Radio Access Network, GERAN).

"First", "second", "third", "fourth", and the like in the embodiments of the present invention are only used for distinguishing different indication information instead of representing an order relationship.

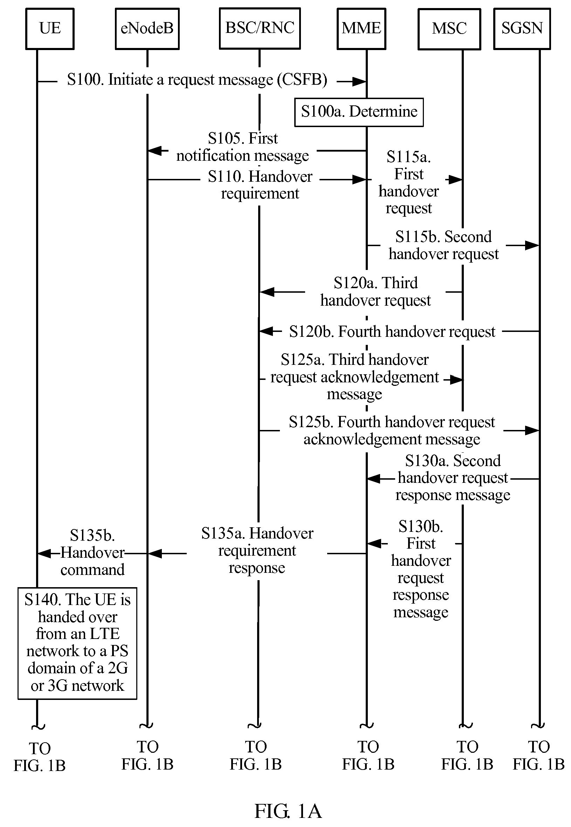

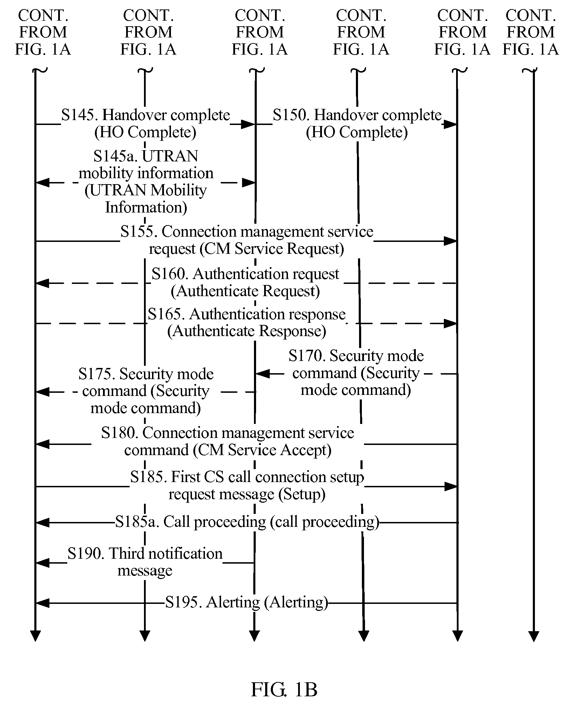

Referring to FIG. 1A and FIG. 1B, FIG. 1A and FIG. 1B show a network handover process and an active call process after a network handover according to an embodiment of the present invention.

S100. A UE sends a request message to an MME, where the request message is used to request circuit switched fallback CSFB. For example, the request message is an extended service request message.

S100a. The MME may determine whether the LTE network and the 2/3G network support a handover of the UE from the LTE network to a CS domain of the 2G or 3G network for the CSFB.

Alternatively, the MME may not perform determination, but consider by default that a communications network supports the handover of the UE from the LTE network to the CS domain of the 2G or 3G network for the CSFB, or determination is performed only on some networks.

S105. The MME sends a first notification message to an evolved NodeB eNB according to the request message, where the first notification message is used to instruct the eNB to move the UE from the LTE network to the 2G or 3G network for the CSFB, that is, the first notification message is used to instruct the eNB that the UE should be moved to the 2G or 3G network for the CSFB.

When the MME determines that the LTE network and the 2G or 3G network support the handover of the UE from the LTE network to the CS domain of the 2G or 3G network for the CSFB, the MME may send the first notification message to inform the eNB whether the LTE network and the 2G or 3G network support the handover of the UE from the LTE network to the circuit switched CS domain of the 2G or 3G network for the CSFB, so that the eNB initiates a handover requirement of handing over the UE from the LTE network to the circuit switched CS domain of the 2G or 3G network for the CSFB.

For example, the first notification message may include third indication information, where the third indication information is used to indicate whether the LTE network and the 2G or 3G network support the handover of the UE from the LTE network to the CS domain of the 2G or 3G network for the CSFB.

For example, the third indication information includes a first information element and a second information element, where the first information element is used to indicate the CSFB, and the second information element is used to indicate whether the LTE network and the 2G or 3G network support the handover of the UE from the LTE network to the CS domain of the 2G or 3G network.

For example, the third indication information may be indication information indicating that the LTE network and the 2G or 3G network support a single radio voice call continuity SRVCC handover of handing over the UE from the LTE network to the 2G or 3G network for the CSFB.

The third indication information in this embodiment of the present invention may be referred to as an optimized CSFB indicator (optimized CSFB indicator), a single radio voice call continuity (single radio voice call continuity, SRVCC)-based CSFB indicator (SRVCC based CSFB Indicator), an enhanced CSFB indicator (enhanced CSFB indicator), or an enhanced CSFB possibility indicator (enhanced CSFB possible), or an SRVCC operation possibility indicator (SRVCC Operation possible).

S110. The eNB sends a handover requirement message to the MME.

The handover requirement message may be a handover requirement message of a handover from the LTE network to a PS domain of the 2G or 3G network, or a handover requirement message of the handover from the LTE network to the CS domain of the 2G or 3G network, or a handover requirement message of a handover from the LTE network to a PS domain and the CS domain of the 2G or 3G network.

The handover requirement message may include UE capability information, and is used to indicate information about a band supported by the UE, an access capability, and the like. For example, the UE capability information may be at least one of a classmark 2 (classmark2) and a classmark 3 (classmark3). In the prior art, when the UE does not support the handover from the LTE network to the CS of the 2G/3G network, the eNB does not send the UE capability information to the MME. Therefore, the MME does not have the UE capability information, but the MME needs to send the UE capability information to an MSC, so that the MSC can perform a handover to the CS of the 2G/3G. After acquiring the UE capability information, the MME may send the UE capability information to the MSC. In this embodiment of the present invention, the UE capability information may be transmitted to the MME by using a handover request message.

The handover requirement message may include second indication information, where the second indication information instructs the MME to hand over the user equipment UE from the LTE network to the circuit switched CS domain of the 2G or 3G network for the CSFB. The second indication information may further indicate that the UE supports the handover from the LTE network to the PS domain of the 2G or 3G network. When the second indication information does not indicate that the UE supports the handover from the LTE network to the PS domain of the 2G or 3G network, a base station may consider by default that the UE supports the handover. A source-to-target container in the handover requirement message may include fifth indication information, where the fifth indication information is used to request a base station of the 2/3G network to hand over the UE from the LTE network to the CS domain of the 2G or 3G network for the CSFB. The fifth indication information may further indicate that the UE supports the handover from the LTE network to the PS domain of the 2G or 3G network.

When the second indication information does not indicate that the UE supports the handover from the LTE network to the PS domain of the 2G or 3G network, the MME may consider by default that the UE supports the handover. When the fifth indication information does not indicate that the UE supports the handover from the LTE network to the PS domain of the 2G or 3G network, the base station may consider by default that the UE supports the handover. The second indication information and the fifth indication information may be referred to as CSFB indicators, optimized CSFB indicators, SRVCC-based CSFB indicators, enhanced CSFB indicators, or enhanced CSFB possibility indicators.

For example, the second indication information may include a CSFB indicator field, or a CSFB indicator field and a UE capability field. The CSFB indicator field instructs the MME to hand over the UE from the LTE network to the circuit switched CS domain of the 2G or 3G network for the CSFB. The UE capability field indicates that the UE supports the handover from the LTE network to the PS domain of the 2G or 3G network.

For example, the fifth indication information may include a CSFB indicator field, or a CSFB indicator field and a UE capability field. The CSFB indicator field instructs the base station of the 2G or 3G network to hand over the UE from the LTE network to the circuit switched CS domain of the 2G or 3G network for the CSFB. The UE capability field indicates that the UE supports the handover from the LTE network to the PS domain of the 2G or 3G network.

For example,
(a) in a case in which a target network is a UTRAN network, the eNB includes the fifth indication information in a source RNC to target RNC transparent container (source RNC to target RNC transparent container), where a CSFB information (CSFB information) field in an existing source RNC to target RNC transparent container may be used as the CSFB indicator field, and a field may be added in the source RNC to target RNC transparent container to be used as the UE capability field;
(b) in a case in which a target network is a GERAN network, the eNB includes the fifth indication information in old BSS to new BSS information (old BSS to new BSS information), where the CSFB indicator field or the UE capability field may be added in the old BSS to new BSS information.

S115a. The MME sends a first handover request message to the MSC, where a handover required by the first handover request message is a handover from the LTE network to the CS domain of the 2G or 3G network, that is, the first handover request is a PS-to-CS handover request.

After receiving the first handover request message, the MSC may prepare a CS voice resource and send a second handover request message to instruct the base station of the 2G or 3G network to prepare the CS voice resource.

The first handover request message may include first indication information, where the first indication information is used to request the MSC to hand over the UE from the Long Term Evolution LTE network to the circuit switched CS domain of the 2G or 3G network for the CSFB, that is, the first indication information is used to indicate that the first handover request is sent for the CSFB. The first indication information may further indicate that the UE supports the handover from the LTE network to the PS domain of the 2G or 3G network. Alternatively, the first handover request message may not indicate the CSFB. In this case, the MSC considers by default that the first handover request is sent for the CSFB.

After the MME receives the UE capability information from the eNB, the first handover request message may include the UE capability information, so that the MSC can perform a handover to the CS of the 2G/3G. For example, the capability information is at least one of a classmark 2 (classmark2) and a classmark 3 (classmark3).

Because the UE does not support the handover from the LTE network to the CS domain of the 2G or 3G network, the UE does not report voice coding/decoding information supported by the UE. In this case, the MME may include default coding/decoding information in the first handover request message according to a target system of a handover.

The first indication information in the first handover request message may be referred to as a CSFB indicator, an optimized CSFB indicator (optimized CSFB indicator), a single radio voice call continuity (single radio voice call continuity, SRVCC)-based CSFB indicator (SRVCC based CSFB Indicator), an enhanced CSFB indicator (enhanced CSFB indicator), or an enhanced CSFB possibility indicator (enhanced CSFB possible).

Because the STN-SR is used for a voice handover between an IP multimedia subsystem and the circuit domain of the 2/3G, and this embodiment of the present invention relates to the circuit switched fallback, when the first handover request message includes a session transfer number-single radio (Session Transfer Number-Single Radio, STN-SR), the MSC ignores the STN-SR number.

S115b. The MME sends a second handover request message to an SGSN, where the second handover request message is used to request the SGSN to initiate a handover from the LTE network to the packet switched PS domain of the 2G or 3G network.

S120a. The MSC sends a third handover request message to the base station of the 2G or 3G network.

The third handover request message includes fourth indication information, where the fourth indication information is used to request the base station to hand over the UE from the LTE network to the CS domain of the 2G or 3G network for the circuit switched fallback CSFB.

Alternatively, the fourth indication information is used to request the base station to hand over the UE from the LTE network to the circuit switched CS domain of the 2G or 3G network for the CSFB and is used to indicate that the UE supports the handover from the LTE network to the PS domain of the 2G or 3G network.

The third handover request message includes a source-to-target transparent container, where the source-to-target transparent container includes the fourth indication information.

S120b. The SGSN sends a fourth handover request message to the base station of the 2G or 3G network, where the fourth handover request message is used to request the base station to hand over the UE from the LTE network to the PS domain of the 2G or 3G network.

The fourth handover request message includes fourth indication information, where the fourth indication information is used to request the base station to hand over the user equipment UE from the Long Term Evolution LTE network to the circuit switched CS domain of the 2G or 3G network for the CSFB.

Alternatively, the fourth indication information is used to request the base station to hand over the UE from the LTE network to the circuit switched CS domain of the 2G or 3G network for the CSFB and is used to indicate that the UE supports the handover from the LTE network to the PS domain of the 2G or 3G network.

The fourth handover request message includes a source-to-target transparent container, where the source-to-target transparent container includes the fourth indication information.

S125a. The base station sends a third handover request acknowledgement message to the MSC.

S125b. The base station sends a fourth handover request acknowledgement message to the SGSN, where the fourth handover request acknowledgement message includes a PS domain RAB, and the PS domain RAB is used to hand over the UE from the LTE network to the packet switched PS domain of the 2G or 3G network for the circuit switched fallback CSFB.

For example, the RAB is a RAB whose domain identifier is a packet switched domain, or the RAB is a PS RAB. For example, the RAB is a RAB whose domain identifier is a packet switched domain, or the RAB may be a CS RAB. However, a domain identifier in the CS RAB is a packet switched domain. When the UE does not support the handover from the LTE network to the CS domain of the 2G/3G network, the UE may use the RAB for the handover from the LTE network to the PS domain of the 2G/3G network, which means that the UE at this time has moved to the 2G/3G network and then the UE can initiate a CS call in the 2G/3G network.

It should be noted that the UE may further initiate a CS supplementary service request in the 2/3G network in addition to the CS call, for example, a locating service request, or a USSD (Unstructured Supplementary Service Data, unstructured supplementary service data) service request. That is, a reason for executing, by the UE, the circuit switched fallback from the LTE network may be that the UE needs to initiate a CS call or initiate a CS supplementary service request in the 2/3G network. After receiving the second handover request message, the base station may generate a CS RAB. The CS RAB may be used for a CS call that is initiated after the UE falls back to the 2G or 3G network. However, the second handover request acknowledgement message may not include the CS RAB.

After receiving the fourth handover request message, the base station may generate a CS RAB. The CS RAB may be used for a CS call that is initiated after the UE falls back to the CS domain. However, the fourth handover request acknowledgement message may not include the CS RAB.

Optionally, according to a UE capability included in the fourth indication information, the base station may determine that the UE supports the handover from the LTE to the PS domain of the 2G or 3G network. Therefore, the fourth handover request acknowledgement message includes a RAB used to hand over the UE from the LTE network to the PS domain of the 2G or 3G network for the CSFB. Alternatively, the base station may consider by default that the UE supports the handover to the PS domain, so that no determining is required.

Optionally, before the base station sends the fourth handover request acknowledgement message to the SGSN, the base station allocates the CS domain RAB, where the fourth handover request acknowledgement message does not include the CS domain RAB.

S130a. The SGSN sends a second handover request response message to the MME, where the second handover request response message includes a PS domain RAB, where the PS domain RAB is used to hand over the UE from the LTE network to the packet switched PS domain of the 2G or 3G network.

S130b. Optionally, the MSC sends a first handover request response message to the MME, and the MME ignores the first handover request response message.

Step S130b may be omitted, that is, the MSC does not send the first handover request response message to the MME.

S135a. The MME sends a handover requirement response to the eNB according to the second handover request response message.

S135b. The eNB sends a handover command to the UE, where the handover command includes the PS domain RAB, where the PS domain RAB is used to hand over the UE from the LTE network to the PS domain of the 2G or 3G network for the CSFB.

Optionally, before the eNB sends the handover command to the UE, the eNB determines that the UE supports the handover from the LTE network to the PS domain of the 2G or 3G network.

S140. The UE is handed over from the LTE network to the PS domain of the 2G or 3G network for the CSFB according to the PS domain RAB included in the handover command.

S145. The UE sends a handover complete message (HO Complete) to the base station (BSC or RNC) after completion of the handover.

S145a. Optionally, after receiving the handover complete message, the RNC/BSC releases the CS RAB generated in step S120a and sets up a new CS RAB. Further, a bearer between the MSC and the BSC/RNC does not need to be modified and may be reused.

After receiving the handover complete message, to respond to the handover complete message, the base station needs to include a location area identity (Location Area Identity, LAI) in UTRAN mobility information (UTRAN Mobility Information) sent to the UE, which, in this embodiment, may cause the UE to initiate location update (Location Area Update, LAU), thereby leading to a failure in setting up a CS call. To avoid the failure, the UTRAN mobility information sent by the base station to the UE may not include the location area identity.

When sending the UTRAN mobility information (UTRAN Mobility Information) in a subsequent process, the RNC may send the LAI to the UE, for example:
(a) after receiving the handover complete message, the RNC starts a timer, and when the timer expires, the RNC sends the UTRAN mobility information (UTRAN Mobility Information), so as to send the LAI to the UE;
(b) after receiving a call release instruction (IU RELEASE COMMAND) or a call connection success message (Connect), the RNC sends the UTRAN mobility information (UTRAN Mobility Information), so as to send the LAI to the UE, where for a calling party, the MSC sends the call connection success message (Connect) to the UE, and for a called party, the UE sends the call connection success message (Connect) to the MSC.

Alternatively, when the UE sends an LAU message to the base station of the 2/3G network, to avoid a failure, the base station of the 2/3G network does not send the location update request message to the MSC, but the base station of the 2G or 3G network sends a location update accept message to the UE.

S150. The base station (BSC or RNC) forwards the handover complete message in step S 145 to the MSC.

After the base station receives a signaling message sent by the UE to the MSC, the base station of the 2G or 3G network sends the signaling message to the MSC by using a connection set up in a process of the handover from the LTE network to the circuit switched CS domain of the 2G or 3G network.

Alternatively, the base station sends the signaling message to the MSC by using a direct transmission message.

S155. The UE sends a connection management service request (CM Service Request) to the MSC.

S160. Optionally, the MSC sends an authentication request (Authenticate Request) to the UE.

S165. Optionally, the UE sends an authentication response (Authenticate Response) to the MSC.

S170. The MSC sends a security mode command (Security mode command) to the base station, where the security mode command carries integrity protection information (Integrity Protection Information) and/or encryption information (Encryption Information), so that the base station sends the security mode command to the UE.

Alternatively, this step S170 may be omitted, that is, the MSC does not send the security mode command to the base station.

S175. The base station sends the security mode command to the UE. Specifically, the base station executes this step according to the security mode command in step S170, or the base station executes this step after receiving the message in S 145.

S180. Optionally, the MSC sends a connection management service command to the UE.

S185. The UE sends a first CS call connection setup request message to the MSC, where the first CS call connection setup request message is used to request the MSC to generate a first session for the CSFB.

S185a. The MSC sends a call proceeding (call proceeding) message to the UE.

S190. The base station sends a third notification message to the UE. The UE may send a third notification response message to the base station.

To achieve maximum match with an existing processing process of the UE, reduce an exception, and avoid a call failure, after the base station receives a call setup message sent by the UE or the call proceeding message sent by the MSC, the base station sends the third notification message to the UE, where the third notification message includes the CS domain RAB allocated by the base station to the UE, such as the CS RAB described in step S125 or the CS RAB described in step S145a. The third notification message may be a radio bearer setup message or a radio bearer reconfiguration message. The UE may use the CS RAB to make a voice call.

Alternatively, the base station may send the third notification message after receiving a second notification message sent by the MSC. The MSC sends the third notification message to the base station after receiving at least one of the following messages, where the third notification message is used to request the base station to allocate a CS domain resource to the UE.

The following messages include the handover complete message sent by the base station, a connection management service request message sent by the UE, and the first CS call connection request message sent by the UE.

S195. The MSC sends an alerting (Alerting) message to the UE. The UE waits for an answer message from a peer end.

After the called party hooks off, the calling party and the called party enter a conversation state.

When the call ends, because the call is triggered by the CSFB, the UE needs to be handed over to the LTE network after the call is completed. According to the second handover request message, the base station determines that the call is triggered by the CSFB. Therefore, after receiving a call release message sent by the MSC, the base station of the 2/3G network redirects the UE to the LTE network or the base station hands over the UE to the LTE network, where the call release message is a release command Iu Release Command or a clear command Clear Command.

It should be noted that in this embodiment, the base station may parse CS signaling between the UE and the MSC. The base station receives the signaling message sent by the UE to the MSC, for example, the connection management service request, the authentication response, or the first CS call connection setup request message. The base station may send the signaling message to the MSC by using the connection set up in the process of the handover from the LTE network to the CS domain of the 2G or 3G network, or send the signaling message to the MSC by using the direct transmission message.

In this embodiment, the first indication information, the second indication information, the fourth indication information, and the fifth indication information may include a CSFB indicator field, or a CSFB indicator field and a UE capability field. The CSFB indicator field instructs the MME to hand over the UE from the LTE network to the circuit switched CS domain of the 2G or 3G network for the CSFB. The UE capability field indicates that the UE supports the handover from the LTE network to the PS domain of the 2G or 3G network.

In FIG. 1A and FIG. 1B, for a UE that supports only a handover from an LTE network to a PS domain of a 2G or 3G network, in a process of implementing CSFB, a radio resource bearer for the handover from the LTE network to the PS domain of the 2G or 3G network is provided for the UE in a process of a handover from the LTE network to a CS domain of the 2G or 3G network, so that the UE can be handed over to the PS domain of the 2G or 3G network in a manner of being handed over from the LTE network to the CS domain of the 2G or 3G network. After being handed over to the PS domain, the UE can make a CS domain call. A network triggers the handover from the LTE network to the CS domain of the 2G or 3G network, so that the network can prepare a voice resource for the CS domain in advance, which shortens a time of a voice call connection.

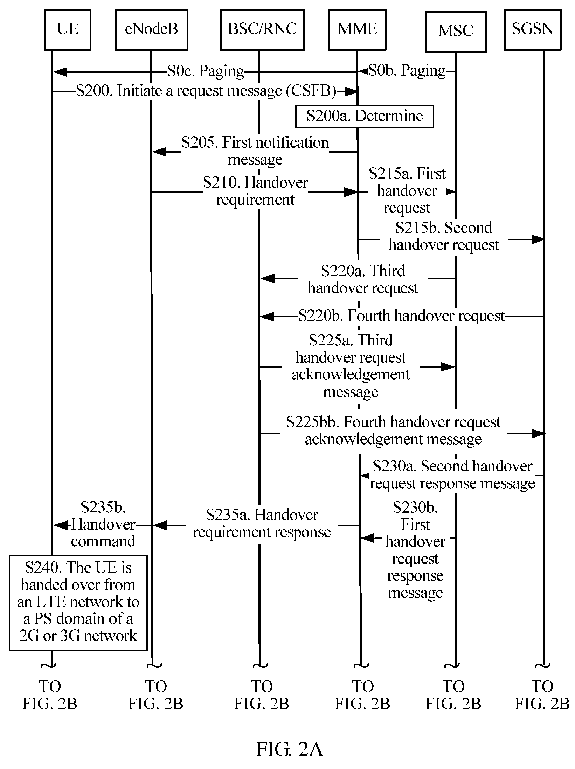

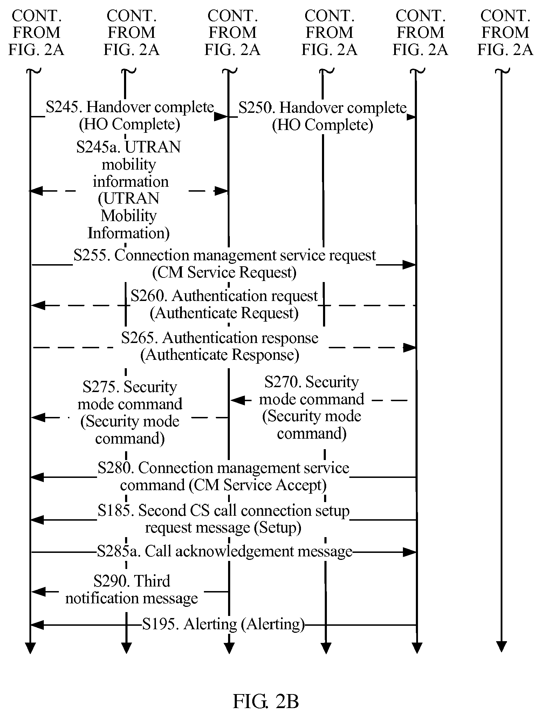

Referring to FIG. 2A and FIG. 2B, FIG. 2A and FIG. 2B show a network handover process and a passive call process after a network handover according to an embodiment of the present invention.

S0b-S0c: An MSC sends a CS paging request to an MME, and the MME triggers a paging process.

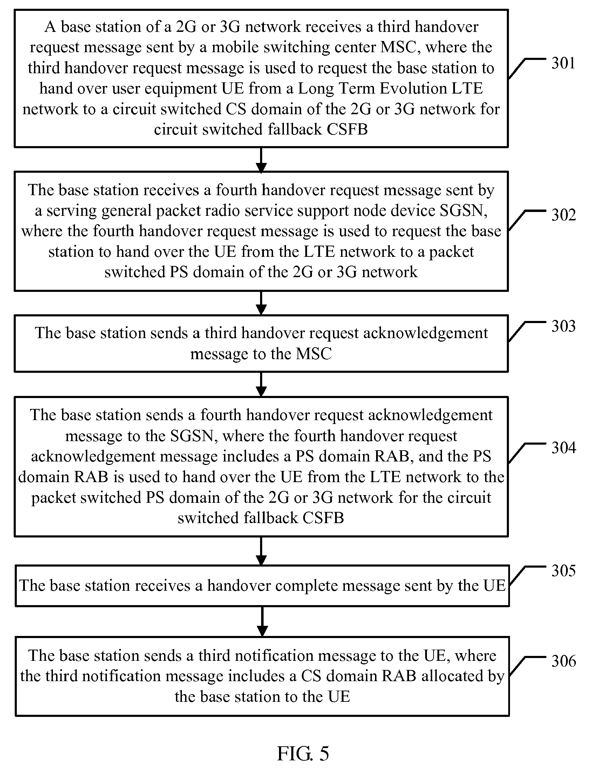

Steps S200-S250 are the same as steps S100-S150 shown in FIG. 5, and details are not described herein.

S255. The UE sends a paging response to the MSC.

S260. Optionally, the MSC sends an authentication request to the UE.

S265. Optionally, the UE sends an authentication response to the MSC.

S270. The MSC sends a security mode command to the base station, where the security mode command carries integrity protection information (Integrity Protection Information) and/or encryption information (Encryption Information), so that the base station sends the security mode command to the UE.

Alternatively, this step S270 may be omitted, that is, the MSC does not send the security mode command to the base station.

S275. The base station sends the security mode command to the UE. Specifically, the base station executes this step according to the security mode command in step S270, or the base station executes this step after receiving the message in S245.

S280. The MSC sends a second CS call connection setup request message to the UE, where the second CS call connection setup request message is used to request the UE to generate a second session for the CSFB.

It should be noted that the MSC may further initiate a CS supplementary service request to the UE in the 2/3G network in addition to the CS call, for example, a locating service request, or a USSD (Unstructured Supplementary Service Data, unstructured supplementary service data) service request. That is, a reason for executing, by the UE, the circuit switched fallback from the LTE network may be that the MSC needs to initiate a CS call or initiate a CS supplementary service request in the 2/3G network.

S285. The MSC receives a call acknowledgement message sent by the UE.

S290. The base station sends a third notification message to the UE. The UE may send a third notification response message to the base station.

To achieve maximum match with an existing processing process of the UE, reduce an exception, and avoid a call failure, after the base station receives a call setup message sent by the MSC or the call acknowledgement message sent by the UE, the base station sends the third notification message to the UE, where the third notification message includes the CS domain RAB allocated by the base station to the UE, such as the CS RAB described in step S225 or the CS RAB described in step S245a. The third notification message may be a radio bearer setup message or a radio bearer reconfiguration message. The UE may use the CS RAB to make a voice call.

Alternatively, the base station may send the third notification message after receiving a second notification message sent by the MSC. The MSC sends the third notification message to the base station after receiving at least one of the following messages, where the third notification message is used to request the base station to allocate a CS domain resource to the UE.

The following messages include the handover complete message sent by the base station, the paging response sent by the UE, and the second CS call connection request message sent by the MSC.

S295. The MSC sends an alerting (Alerting) message to the UE.

The UE hooks off to enter a conversation state.

When the call ends, because the call is triggered by the CSFB, the UE needs to be handed over to the LTE network after the call is completed. According to the second handover request message, the base station determines that the call is triggered by the CSFB. Therefore, after receiving a call release message sent by the MSC, the base station of the 2/3G network redirects the UE to the LTE network or the base station hands over the UE to the LTE network, where the call release message is a release command Iu Release Command or a clear command Clear Command.

It should be noted that in this embodiment, the base station may parse CS signaling between the UE and the MSC. The base station receives the signaling message sent by the UE to the MSC, for example, the call acknowledgement message, the authentication response, or the second CS call connection setup request message. The base station may send the signaling message to the MSC by using the connection set up in the process of the handover from the LTE network to the CS domain of the 2G or 3G network, or send the signaling message to the MSC by using the direct transmission message.

In this embodiment, the first indication information, the second indication information, the fourth indication information, and the fifth indication information may include a CSFB indicator field, or a CSFB indicator field and a UE capability field. The CSFB indicator field instructs the MME or the eNB or the base station of the 2G or 3G network to hand over the UE from the LTE network to the circuit switched CS domain of the 2G or 3G network for the CSFB. The UE capability field indicates that the UE supports the handover from the LTE network to the PS domain of the 2G or 3G network.

In the foregoing two application scenarios, an entire network handover and session process is described from two perspectives: the UE as a calling party and the UE as a called party.

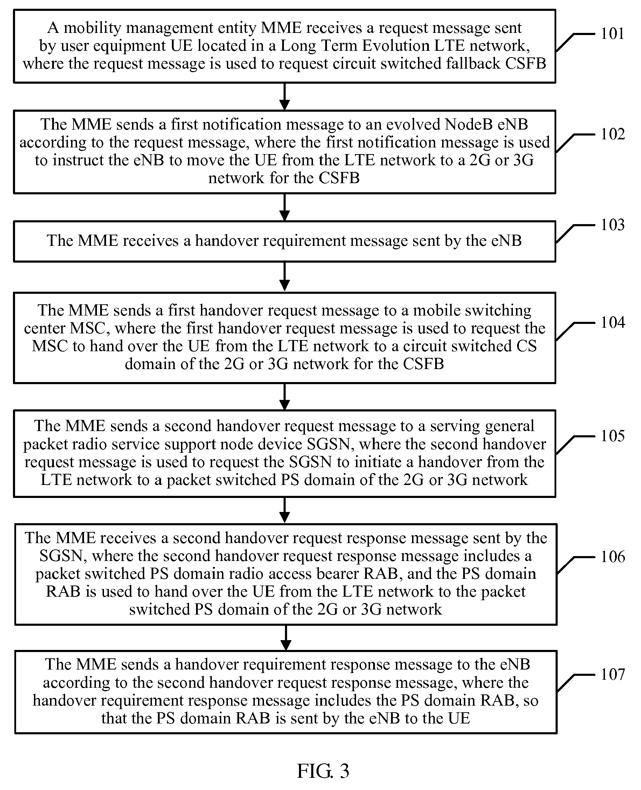

Referring to FIG. 3, an embodiment of a network handover method provided in an embodiment of the present invention includes the following steps:
101. A mobility management entity MME receives a request message initiated by user equipment UE located in a Long Term Evolution LTE network, where the request message is used to request circuit switched fallback CSFB.
102. The MME sends a first notification message to an evolved NodeB eNB according to the request message, where the first notification message is used to instruct the eNB to move the UE from the LTE network to a 2G or 3G network for the CSFB.
103. The MME receives a handover requirement message sent by the eNB.
104. The MME sends a first handover request message to a mobile switching center MSC, where the first handover request message is used to request the MSC to hand over the UE from the LTE network to a circuit switched CS domain of the 2G or 3G network for the CSFB.
105. The MME sends a second handover request message to a serving general packet radio service support node device SGSN, where the second handover request message is used to request the SGSN to initiate a handover from the LTE network to a packet switched PS domain of the 2G or 3G network.
106. The MME receives a second handover request response message sent by the SGSN, where the second handover request response message includes a packet switched PS domain radio access bearer RAB, and the PS domain RAB is used to hand over the UE from the LTE network to the packet switched PS domain of the 2G or 3G network.
107. The MME sends a handover requirement response message to the eNB according to the second handover request response message, where the handover requirement response message includes the PS domain RAB, so that the PS domain RAB is sent by the eNB to the UE.

For the foregoing processing steps and other processing steps of the MME in this embodiment, reference may be made to the description in the embodiment corresponding to FIG. 1A and FIG. 1B or FIG. 2A and FIG. 2B, and details are not described herein.

In contrast with the prior art, according to the method provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance. After being handed over to the PS domain, the UE can make a CS domain call, which shortens a time of a voice call connection.

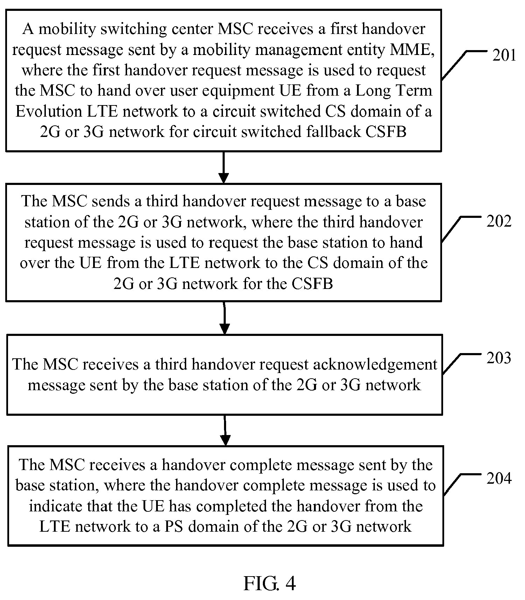

Referring to FIG. 4, another embodiment of a network handover method provided in an embodiment of the present invention includes the following steps:
201. A mobile switching center MSC receives a first handover request message sent by a mobility management entity MME, where the first handover request message is used to request the MSC to hand over user equipment UE from a Long Term Evolution LTE network to a circuit switched CS domain of a 2G or 3G network for circuit switched fallback CSFB.
202. The MSC sends a third handover request message to a base station of the 2G or 3G network, where the third handover request message is used to request the base station to hand over the UE from the LTE network to the CS domain of the 2G or 3G network for the CSFB.
203. The MSC receives a third handover request acknowledgement message sent by the base station of the 2G or 3G network.

The third handover request acknowledgement message may include a packet switched PS domain radio access bearer RAB, where the PS domain RAB is used to hand over the UE from the LTE network to a packet switched PS domain of the 2G or 3G network for the CSFB. Alternatively, the third handover request acknowledgement message may not include the PS domain RAB.

204. The MSC receives a handover complete message sent by the base station, where the handover complete message is used to indicate that the UE has completed the handover from the LTE network to the CS domain of the 2G or 3G network.

The MSC sends a third notification message to the base station after receiving at least one of the following messages or after sending the second CS call connection request message, where the third notification message is used to request the base station to allocate a CS domain resource to the UE.

The following messages include the handover complete message sent by the base station, a connection management service request message sent by the UE, the first CS call connection request message sent by the UE, and a paging response message sent by the UE.

For the foregoing processing steps and other processing steps of the MSC in this embodiment, reference may be made to the description in the embodiment corresponding to FIG. 1A and FIG. 1B or FIG. 2A and FIG. 2B, and details are not described herein.

In contrast with the prior art, according to the method provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance. After being handed over to the PS domain, the UE can make a CS domain call, which shortens a time of a voice call connection.

Referring to FIG. 5, another embodiment of a network handover method provided in an embodiment of the present invention includes the following steps:
301. A base station of a 2G or 3G network receives a third handover request message sent by a mobile switching center MSC, where the third handover request message is used to request the base station to hand over user equipment UE from a Long Term Evolution LTE network to a circuit switched CS domain of the 2G or 3G network for circuit switched fallback CSFB.
302. The base station receives a fourth handover request message sent by a serving general packet radio service support node device SGSN, where the fourth handover request message is used to request the base station to hand over the UE from the LTE network to a packet switched PS domain of the 2G or 3G network for the CSFB.
303. The base station sends a third handover request acknowledgement message to the MSC.

The third handover request acknowledgement message may include a PS domain radio access bearer RAB, where the PS domain RAB is used to hand over the UE from the LTE network to the packet switched PS domain of the 2G or 3G network for the CSFB. Alternatively, the third handover request acknowledgement message may not include the PS domain RAB.

304. The base station sends a fourth handover request acknowledgement message to the SGSN, where the fourth handover request acknowledgement message includes the PS domain RAB, and the PS domain RAB is used to hand over the UE from the LTE network to the packet switched PS domain of the 2G or 3G network for the CSFB.

305. The base station receives a handover complete message sent by the UE.

306. The base station sends a third notification message to the UE, where the third notification message includes a CS domain RAB allocated by the base station to the UE.

For the foregoing processing steps and other processing steps of the base station in this embodiment, reference may be made to the description in the embodiment corresponding to FIG. 1A and FIG. 1B or FIG. 2A and FIG. 2B, and details are not described herein.

In contrast with the prior art, according to the method provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance. After being handed over to the PS domain, the UE can make a CS domain call, which shortens a time of a voice call connection.

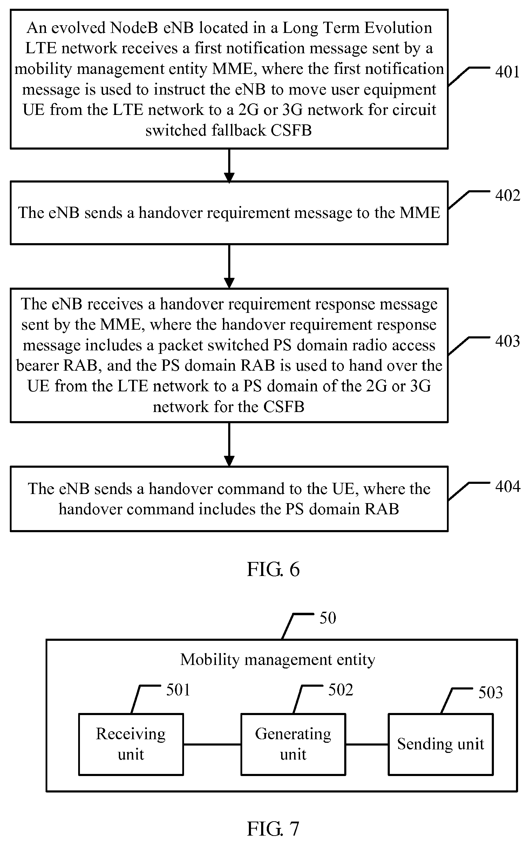

Referring to FIG. 6, another embodiment of a network handover method provided in an embodiment of the present invention includes the following steps:
401. An evolved NodeB eNB located in a Long Term Evolution LTE network receives a first notification message sent by a mobility management entity MME, where the first notification message is used to instruct the eNB to move user equipment UE from the LTE network to a 2G or 3G network for circuit switched fallback CSFB.
402. The eNB sends a handover requirement message to the MME.

The handover requirement message is used to request the MME to hand over the UE from the LTE network to a circuit switched CS domain of the 2G or 3G network for the CSFB.

403. The eNB receives a handover requirement response message sent by the MME, where the handover requirement response message includes a packet switched PS domain radio access bearer RAB, and the PS domain RAB is used to hand over the UE from the LTE network to a PS domain of the 2G or 3G network for the CSFB.

404. The eNB sends a handover command to the UE, where the handover command includes the PS domain RAB.

For the foregoing processing steps and other processing steps of the evolved NodeB in this embodiment, reference may be made to the description in the embodiment corresponding to FIG. 1A and FIG. 1B or FIG. 2A and FIG. 2B, and details are not described herein.

In contrast with the prior art, according to the method provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance.

Referring to FIG. 7, an embodiment of a mobility management entity 50 provided in an embodiment of the present invention includes: a receiving unit 501, a generating unit 502, and a sending unit 503.

The receiving unit 501 is configured to receive a request message initiated by user equipment UE located in a Long Term Evolution LTE network, where the request message is used to request circuit switched fallback CSFB.

The generating unit 502 is configured to generate a first notification message according to the request message received by the receiving unit 501, where the first notification message is used to instruct an evolved NodeB eNB to move the UE from the LTE network to a 2G or 3G network for the CSFB.

The sending unit 503 is configured to send, to the eNB, the first notification message generated by the generating unit 502.

The receiving unit 501 is further configured to receive a handover requirement message sent by the eNB.

The generating unit 502 is further configured to generate a first handover request message and a second handover request message according to the handover requirement message received by the receiving unit 501, where the first handover request message is used to request the MSC to hand over the UE from the LTE network to a circuit switched CS domain of the 2G or 3G network for the CSFB, and the second handover request message is used to request the SGSN to initiate a handover from the LTE network to a packet switched PS domain of the 2G or 3G network.

The sending unit 503 is further configured to: send, to the mobile switching center MSC, the first handover request message generated by the generating unit 502 and send, to the serving general packet radio service support node device SGSN, the second handover request message generated by the generating unit.

The receiving unit 501 is further configured to receive a second handover request response message sent by the SGSN, where the second handover request response message includes a PS domain RAB, and the PS domain RAB is used to hand over the UE from the LTE network to the PS domain of the 2G or 3G network.

The generating unit 502 is further configured to generate a handover requirement response message according to the second handover request response message received by the receiving unit 501, where the handover requirement response message includes the PS domain RAB.

The sending unit 503 is further configured to send, to the eNB, the handover requirement response message generated by the generating unit 502, where the handover requirement response message includes the PS domain RAB, so that the PS domain RAB is sent by the eNB to the UE.

The mobility management entity in this embodiment can execute the method steps of the MME described in the method embodiments shown in FIG. 1A and FIG. 1B, FIG. 2A and FIG. 2B, and FIG. 3. A person skilled in the art may also learn an action of each unit in the MME and action relationships between the units according to the steps executed in the method embodiments.

In contrast with the prior art, according to the MME provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance. After being handed over to the PS domain, the UE can make a CS domain call, which shortens a time of a voice call connection.

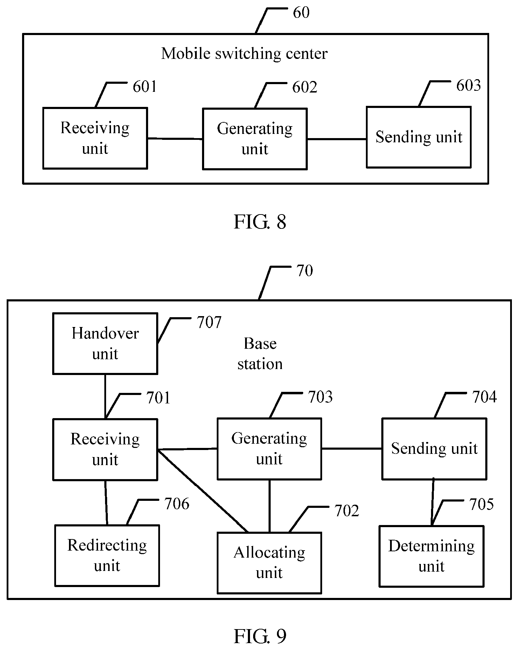

Referring to FIG. 8, an embodiment of a mobile switching center MSC 60 provided in an embodiment of the present invention includes: a receiving unit 601, a generating unit 602, and a sending unit 603.

The receiving unit 601 is configured to receive a first handover request message sent by a mobility management entity MME, where the first handover request message is used to request the MSC to hand over user equipment UE from a Long Term Evolution LTE network to a circuit switched CS domain of a 2G or 3G network for circuit switched fallback CSFB.

The generating unit 602 is configured to generate a third handover request message according to the first handover request message received by the receiving unit 601, where the third handover request message is used to request a base station of the 2G or 3G network to hand over the UE from the LTE network to the CS domain of the 2G or 3G network for the CSFB.

The sending unit 603 is configured to send, to the base station, the third handover request message generated by the generating unit 602.

The receiving unit 601 is further configured to receive a third handover request acknowledgement message sent by the base station, where the third handover request acknowledgement message may include a PS domain radio access bearer RAB, and the PS domain RAB is used to hand over the UE from the LTE network to a packet switched PS domain of the 2G or 3G network for the CSFB; or may not include the PS domain RAB.

The receiving unit 601 is further configured to receive a handover complete message sent by the base station, where the handover complete message is used to indicate that the UE has completed the handover from the LTE network to the CS domain of the 2G or 3G network.

The receiving unit 601 is further configured to receive a first CS call connection request message sent by the UE.

The generating unit 602 is further configured to generate a first session for the UE.

The sending unit 603 is further configured to send, to the UE, a second CS call connection request message generated by the generating unit, where the second CS call connection request message is used to request the UE to generate a second session.

The receiving unit 601 is further configured to receive a connection management service request message sent by the UE, a paging response message sent by the UE.

The sending unit 603 is further configured to send a second notification message generated by the generating unit to the base station after the receiving unit 601 receives at least one of the following messages, where the second notification message is used to request the base station to allocate a CS domain resource to the UE, and the following messages include: the handover complete message, the connection management service request message sent by the UE, the first CS call connection request message, and the paging response message sent by the UE.

The sending unit 603 is further configured to send a second notification message generated by the generating unit to the base station after the sending unit sends the second CS call connection request message, where the second notification message is used to request the base station to allocate a CS domain resource to the UE.

The MSC in this embodiment can execute the method steps of the MSC described in the method embodiments shown in FIG. 1A and FIG. 1B, FIG. 2A and FIG. 2B, and FIG. 4. A person skilled in the art may also learn an action of each unit in the MSC and action relationships between the units according to the steps executed in the method embodiments.

In contrast with the prior art, according to the mobile switching center provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance.

Referring to FIG. 9, an embodiment of a base station of a 2G or 3G network provided in an embodiment of the present invention includes: a receiving unit 701, an allocating unit 702, a generating unit 703, and a sending unit 704.

The receiving unit 701 is configured to receive a third handover request message sent by a mobile switching center MSC, where the third handover request message is used to request the base station to hand over user equipment UE from a Long Term Evolution LTE network to a circuit switched CS domain of the 2G or 3G network for circuit switched fallback CSFB; and further configured to receive a fourth handover request message sent by a serving general packet radio service support node device SGSN, where the fourth handover request message is used to request the base station to hand over the UE from the LTE network to a packet switched PS domain of the 2G or 3G network for the CSFB.

The allocating unit 702 is configured to allocate a PS domain RAB to the UE according to the fourth handover request message received by the receiving unit 701, where the PS domain RAB is used to hand over the UE from the LTE network to the packet switched PS domain of the 2G or 3G network for the circuit switched fallback CSFB.

The generating unit 703 is configured to: generate a third handover request acknowledgement message according to the third handover request message received by the receiving unit 701, and generate a fourth handover request acknowledgement message according to the fourth handover request message received by the receiving unit, where the fourth handover request acknowledgement message includes the PS domain radio access bearer RAB, and the PS domain RAB is used to hand over the UE from the LTE network to the packet switched PS domain of the 2G or 3G network for the CSFB.

The sending unit 704 is configured to: send, to the MSC, the third handover request acknowledgement message generated by the generating unit 703 and send, to the SGSN, the fourth handover request acknowledgement message generated by the generating unit; the receiving unit is further configured to receive a handover complete message sent by the UE; and the allocating unit is further configured to allocate a CS domain RAB to the UE according to the third handover request message received by the receiving unit.

The generating unit 703 is further configured to: generate a third notification message according to the handover complete message received by the receiving unit 701, to send the third notification message to the UE, where the third notification message includes the CS domain RAB; and the sending unit is further configured to send, to the UE, the third notification message generated by the generating unit.

The receiving unit 701 is further configured to: receive a call setup message or a call acknowledgement message sent by the UE, or receive a call proceeding message sent by the MSC.

The sending unit 704 sends the third notification message to the UE after the receiving unit 701 receives the call setup message or the call acknowledgement message sent by the UE, or after the receiving unit receives the call proceeding message sent by the MSC.

The sending unit 704 is further configured to: send universal mobile telecommunications system terrestrial radio access network UTRAN mobility information to the UE after the receiving unit receives the handover complete message, where the UTRAN mobility information does not include a location area identity LAI; and send the LAI to the UE after a preset time.

The sending unit 704 is further configured to send universal mobile telecommunications system terrestrial radio access network UTRAN mobility information to the UE after the receiving unit 701 receives the handover complete message, where the UTRAN mobility information does not include a location area identity LAI.

The receiving unit 701 is further configured to receive a call release command sent by the MSC, a call connection success message sent by the MSC, or a call connection success message sent by the UE.

The sending unit 704 is further configured to send the LAI to the UE after the receiving unit receives the call release command or the call connection success message.

The receiving unit 701 is further configured to receive a location update request message sent by the UE.

The base station further includes a determining unit 705.

The determining unit 705 is configured to determine not to send the location update request message to the MSC.

The sending unit 704 is further configured to send a location update accept message to the UE.

The receiving unit 701 is further configured to receive a call release message sent by the MSC.

The base station 70 further includes a redirecting unit 706 or a handover unit 707.

The redirecting unit 706 is configured to redirect the UE to the LTE network according to the call release message.

The handover unit 707 is configured to hand over the UE to the LTE network according to the call release message.

The base station in this embodiment can execute the method steps of the base station described in the method embodiments shown in FIG. 1A and FIG. 1B, FIG. 2A and FIG. 2B, and FIG. 5. A person skilled in the art may also learn an action of each unit in the base station and action relationships between the units according to the steps executed in the method embodiments.

In contrast with the prior art, according to the base station provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance.

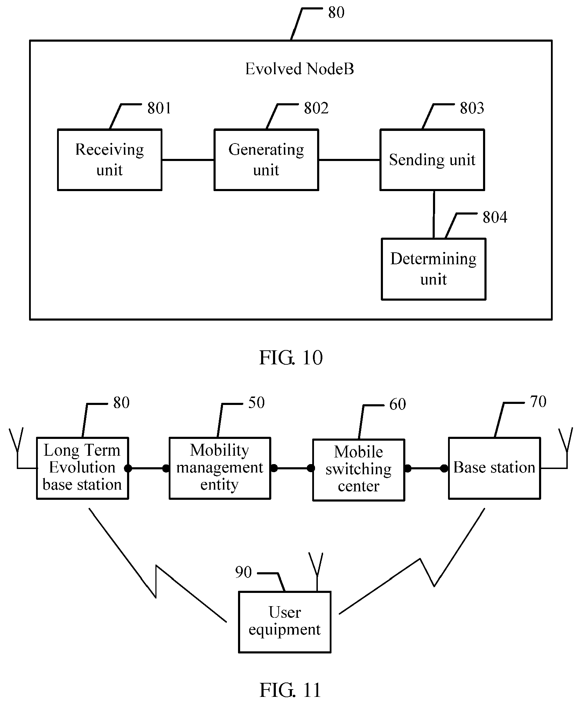

Referring to FIG. 10, an embodiment of an evolved NodeB eNB provided in an embodiment of the present invention includes: a receiving unit 801, a generating unit 802, and a sending unit 803.

The receiving unit 801 is configured to receive a first notification message sent by a mobility management entity MME, where the first notification message is used to instruct the eNB to move user equipment UE from a Long Term Evolution LTE network to a 2G or 3G network for circuit switched fallback CSFB.

The generating unit 802 is configured to generate a handover requirement message according to the first notification message received by the receiving unit 801, where the handover requirement message is used to request the MME to hand over the UE from the LTE network to a circuit switched CS domain of the 2G or 3G network for the CSFB.

The sending unit 803 is configured to send, to the MME, the handover requirement message generated by the generating unit 802.

The receiving unit 801 is further configured to receive a handover requirement response message sent by the MME, where the handover requirement response message includes a packet switched PS domain radio access bearer RAB, and the PS domain RAB is used to hand over the UE from the LTE network to a PS domain of the 2G or 3G network for the CSFB.

The generating unit 802 is further configured to generate a handover command according to the first notification message received by the receiving unit 801, where the handover command includes the PS domain RAB.

The sending unit 803 is further configured to send, to the UE, the handover command generated by the generating unit 802.

The evolved NodeB further includes:
a determining unit 804, configured to: before the sending unit 803 sends the handover requirement message to the MME, determine that the UE supports the handover from the LTE network to the PS domain of the 2G or 3G network; and/or before the sending unit sends the handover command to the UE, determine that the UE supports the handover from the LTE network to the PS domain of the 2G or 3G network.

The evolved NodeB in this embodiment can execute the method steps of the evolved NodeB described in the method embodiments shown in FIG. 1A and FIG. 1B, FIG. 2A and FIG. 2B, and FIG. 6. A person skilled in the art may also learn an action of each unit in the evolved NodeB and action relationships between the units according to the steps executed in the method embodiments.

In contrast with the prior art, according to the evolved NodeB provided in this embodiment of the present invention, for a UE that supports only a handover from an LTE network to a PS domain of a 2G or 3G network, in a process of implementing CSFB, by triggering a handover from the LTE network to a CS domain of the 2G or 3G network at the same time in a handover process of the handover from the LTE network to the PS domain of the 2G or 3G network, a CS resource is reserved for the UE, and a radio resource bearer for the handover from the LTE network to the PS domain of the 2G or 3G network is provided for the UE, so that the UE can access the 2G or 3G network in a manner of being handed over from the LTE network to the PS domain of the 2G or 3G network, and a network prepares a voice resource for the CS domain in advance.

A person skilled in the art may understand that in the embodiments shown in FIG. 7 to FIG. 10 in the foregoing, a sending unit configured to send a message may be implemented by using a transmitter, and a receiving unit configured to receive a message may be implemented by using a receiver. Alternatively, both the sending unit and the receiving unit may be implemented by using a transceiver. During physical implementation, the transmitter or transceiver may be implemented by using one physical entity or by multiple physical entities, and the transmitter and the transceiver may be implemented by using one physical entity or by multiple physical entities, which is not limited in the present invention. Other units such as an ignoring unit, an allocating unit, a redirecting unit, a handover unit, and a determining unit may be implemented by using one or more processors, which is not limited in the present invention. Programs executed by the processor in the embodiments of the present invention may be stored in a memory.

Referring to FIG. 11, a network handover system provided in an embodiment of the present invention includes: a mobility management entity 50, an evolved NodeB 80, a mobile switching center 60, a base station 70, and user equipment 90.

For actions performed by the mobility management entity 50, the evolved NodeB 80, the mobile switching center 60, the base station 70, and the user equipment 90 and interactions of the mobility management entity 50, the evolved NodeB 80, the mobile switching center 60, the base station 70, and the user equipment 90, reference may be made to the descriptions about FIG. 1A and FIG. 1B and FIG. 2A and FIG. 2B and descriptions about the method embodiments and the apparatus embodiments shown in FIG. 3 to FIG. 10, and details are not described herein.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that such implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A network handover method, comprising:
receiving, by a mobility management entity MME, a request message initiated by a user equipment UE in a Long Term Evolution LTE network, wherein the request message is used to request circuit switched fallback CSFB;
sending, by the MME, a first notification message to an evolved NodeB eNB according to the request message, wherein the first notification message is used to instruct the eNB to move the UE from the LTE network to a 2G or 3G network for the CSFB;
receiving, by the MME, a handover requirement message sent by the eNB;
sending, by the MME, a first handover request message to a mobile switching center MSC, wherein the first handover request message is used to request the MSC to hand over the UE from the LTE network to a circuit switched CS domain of the 2G or 3G network for the CSFB;
sending, by the MME, a second handover request message to a serving general packet radio service support node SGSN, wherein the second handover request message is used to request the SGSN to hand over the UE from the LTE network to a packet switched PS domain of the 2G or 3G network for the CSFB;
receiving, by the MME, a second handover request response message sent by the SGSN, wherein the second handover request response message comprises a PS domain radio access bearer RAB, and the PS domain RAB is used to hand over the UE from the LTE network to the packet switched PS domain of the 2G or 3G network; and
sending, by the MME, a handover requirement response message to the eNB according to the second handover request response message, wherein the handover requirement response message comprises the PS domain RAB, so that the PS domain RAB is sent by the eNB to the UE.

2. The method according to claim 1, wherein
the first handover request message is further used to indicate that the UE supports the handover from the LTE network to the PS domain of the 2G or 3G network.

3. The method according to claim 1 or 2, wherein
the handover requirement message comprises first indication information, wherein the first indication information is used to instruct the MME to hand over the UE from the LTE network to the CS domain of the 2G or 3G network for the CSFB, or the first indication information is used to request the MME to hand over the UE from the LTE network to the CS domain of the 2G or 3G network for the CSFB and is used to indicate that the UE supports the handover from the LTE network to the PS domain of the 2G or 3G network.

4. The method according to any one of claims 1 to 3, further comprising:
receiving, by the MME, a first handover request response message sent by the MSC.

5. A network handover method, comprising:
receiving, by a mobile switching center MSC, a first handover request message sent by a mobility management entity MME, wherein the first handover request message is used to request the MSC to hand over a user equipment UE from a Long Term Evolution LTE network to a circuit switched CS domain of a 2G or 3G network for circuit switched fallback CSFB;
sending, by the MSC, a third handover request message to a base station of the 2G or 3G network, wherein the third handover request message is used to request the base station to hand over the UE from the LTE network to the CS domain of the 2G or 3G network for the CSFB;
receiving, by the MSC, a third handover request acknowledgement message sent by the base station; and
receiving, by the MSC, a handover complete message sent by the base station, wherein the handover complete message is used to indicate that the UE has completed the handover from the LTE network to the CS domain of the 2G or 3G network.

6. The method according to claim 5, further comprising:
receiving, by the MSC, a first CS call connection request message sent by the UE;
generating, by the MSC, a first session for the UE.

7. The method according to claim 6, further comprising:
sending, by the MSC, a second notification message to the base station after receiving at least one of the following messages, wherein the second notification message is used to request the base station to allocate a CS domain resource to the UE,
wherein
the following messages comprise the handover complete message, a connection management service request message sent by the UE, the first CS call connection request message, and a paging response message sent by the UE.

8. The method according to claim 5, further comprising:
sending, by the MSC, a second CS call connection request message to the UE, wherein the second CS call connection request message is used to request generation of a second session.

9. The method according to claim 8, wherein the method further comprises:
sending, by the MSC, a second notification message to the base station after sending the second CS call connection request message, wherein the second notification message is used to request the base station to allocate a CS domain resource to the UE.

10. The method according to any one of claims 5 to 9, wherein
the third handover request message is further used to indicate that the UE supports a handover from the LTE network to a packet switched PS domain of the 2G or 3G network; and/or
the first handover request message is further used to indicate that the UE supports a handover from the LTE network to a packet switched PS domain of the 2G or 3G network.

11. A network handover method, comprising:
receiving, by a base station of a 2G or 3G network, a third handover request message sent by a mobile switching center MSC, wherein the third handover request message is used to request the base station to hand over a user equipment UE from a Long Term Evolution LTE network to a circuit switched CS domain of the 2G or 3G network for circuit switched fallback CSFB;
receiving, by the base station, a fourth handover request message sent by a serving general packet radio service support node SGSN, wherein the fourth handover request message is used to request the base station to hand over the UE from the LTE network to a packet switched PS domain of the 2G or 3G network for the CSFB;
sending, by the base station, a third handover request acknowledgement message to the MSC;
sending, by the base station, a fourth handover request acknowledgement message to the SGSN, wherein the fourth handover request acknowledgement message comprises a PS domain RAB, and the PS domain RAB is used to hand over the UE from the LTE network to the PS domain of the 2G or 3G network for the CSFB;
receiving, by the base station, a handover complete message sent by the UE; and
sending, by the base station, a third notification message to the UE, wherein the third notification message comprises a CS domain RAB allocated by the base station to the UE.

12. The method according to claim 11, wherein
the third handover request message is further used to indicate that the UE supports the handover from the LTE network to the PS domain of the 2G or 3G network; and/or
the fourth handover request message is further used to indicate that the UE supports the handover from the LTE network to the PS domain of the 2G or 3G network.

13. The method according to claim 11 or 12, wherein
the base station sends the second notification message to the UE after the base station receives a call setup message or a call acknowledgement message sent by the UE; or
the base station sends the second notification message to the UE after the base station receives a call proceeding message sent by the MSC.

14. The method according to any one of claims 11 to 13, wherein the method further comprises:
sending, by the base station, universal mobile telecommunications system terrestrial radio access network UTRAN mobility information to the UE after the base station receives the handover complete message, wherein the UTRAN mobility information does not comprise a location area identity LAI; and sending, by the base station, the LAI to the UE after a preset time; or
sending, by the base station, UTRAN mobility information to the UE after the base station receives the handover complete message, wherein the UTRAN mobility information does not comprise a location area identity LAI, and sending, by the base station, the LAI to the UE after receiving a call release command sent by the MSC, a call connection success message sent by the MSC, or a call connection success message sent by the UE.

15. The method according to any one of claims 11 to 14, wherein the method further comprises:
receiving, by the base station, a location update request message sent by the UE;
determining, by the base station, not to send the location update request message to the MSC; and
sending, by the base station, a location update accept message to the UE.

16. The method according to any one of claims 11 to 15, wherein the method further comprises:
receiving, by the base station, a call release message sent by the MSC; and
redirecting, by the base station, the UE to the LTE network according to the call release message, or handing over, by the base station, the UE to the LTE network according to the call release message.

17. A network handover method, comprising:
receiving, by an evolved NodeB eNB in a Long Term Evolution LTE network, a first notification message sent by a mobility management entity MME, wherein the first notification message is used to instruct the eNB to move a user equipment UE from the LTE network to a 2G or 3G network for circuit switched fallback CSFB;
sending, by the eNB, a handover requirement message to the MME, wherein the handover requirement message is used to request the MME to hand over the UE from the LTE network to a circuit switched CS domain of the 2G or 3G network for the CSFB;
receiving, by the eNB, a handover requirement response message sent by the MME, wherein the handover requirement response message comprises a packet switched PS domain radio access bearer RAB, and the PS domain RAB is used to hand over the UE from the LTE network to a PS domain of the 2G or 3G network for the CSFB; and
sending, by the eNB, a handover command to the UE, wherein the handover command comprises the PS domain RAB.

18. The method according to claim 17, wherein
the first notification message is further used to indicate that the LTE network and the 2G or 3G network support the handover of the UE from the LTE network to the circuit switched CS domain of the 2G or 3G network for the CSFB.

19. The method according to claim 17 or 18, wherein
the handover requirement message comprises first indication information, wherein the first indication information is used to request the MME to hand over the UE from the LTE network to the CS domain of the 2G or 3G network for the CSFB, or the first indication information is used to request the MME to hand over the UE from the LTE network to the CS domain of the 2G or 3G network for the CSFB and is used to indicate that the UE supports the handover from the LTE network to the PS domain of the 2G or 3G network; or
a source-to-target container in the handover requirement message comprises second indication information, wherein the second indication information is used to request a base station of the 2G or 3G network to hand over the UE from the LTE network to the CS domain of the 2G or 3G network for the CSFB; or
a source-to-target container in the handover requirement message comprises second indication information, wherein the second indication information is used to request a base station of the 2G or 3G network to hand over the UE from the LTE network to the CS domain of the 2G or 3G network for the CSFB and is used to indicate that the UE supports the handover from the LTE network to the PS domain of the 2G or 3G network.

20. The method according to any one of claims 17 to 19, wherein the method further comprises:
before the eNB sends the handover requirement message to the MME, determining, by the eNB, that the UE supports the handover from the LTE network to the PS domain of the 2G or 3G network; and/or
before the eNB sends the handover command to the UE, determining, by the eNB, that the UE supports the handover from the LTE network to the PS domain of the 2G or 3G network.

21. A mobility management entity MME, comprising:
a receiving unit, configured to receive a request message initiated by a user equipment UE in a Long Term Evolution LTE network, wherein the request message is used to request circuit switched fallback CSFB;
a generating unit, configured to generate a first notification message according to the request message received by the receiving unit, wherein the first notification message is used to instruct an evolved NodeB eNB to move the UE from the LTE network to a 2G or 3G network for the CSFB; and
a sending unit, configured to send, to the eNB, the first notification message generated by the generating unit; wherein
the receiving unit is further configured to receive a handover requirement message sent by the eNB;
the generating unit is further configured to generate a first handover request message and a second handover request message according to the handover requirement message received by the receiving unit, wherein the first handover request message is used to request a mobile switching center MSC to hand over the UE from the LTE network to a circuit switched CS domain of the 2G or 3G network for the CSFB, and the second handover request message is used to request a serving general packet radio service support node SGSN to hand over the UE from the LTE network to a packet switched PS domain of the 2G or 3G network for the CSFB;
the sending unit is further configured to: send, to the MSC, the first handover request message generated by the generating unit and send, to the SGSN, the second handover request message generated by the generating unit;
the receiving unit is further configured to receive a second handover request response message sent by the SGSN, wherein the second handover request response message comprises a PS domain RAB, and the PS domain RAB is used to hand over the UE from the LTE network to the PS domain of the 2G or 3G network;
the generating unit is further configured to generate a handover requirement response message according to the second handover request response message received by the receiving unit, wherein the handover requirement response message comprises the PS domain RAB; and
the sending unit is further configured to send, to the eNB, the handover requirement response message generated by the generating unit, wherein the handover requirement response message comprises the PS domain RAB, so that the PS domain RAB is sent by the eNB to the UE.

22. The mobility management entity according to claim 21, wherein
the first handover request message is further used to indicate that the UE supports the handover from the LTE network to the PS domain of the 2G or 3G network.

23. The mobility management entity according to claim 21 or 22, wherein
the handover requirement message comprises first indication information, wherein the first indication information is used to instruct the MME to hand over the UE from the LTE network to the CS domain of the 2G or 3G network for the CSFB, or the first indication information is used to request the MME to hand over the UE from the LTE network to the CS domain of the 2G or 3G network for the CSFB and is used to indicate that the UE supports the handover from the LTE network to the PS domain of the 2G or 3G network.

24. The mobility management entity according to any one of claims 21 to 23,
wherein
the receiving unit is further configured to receive a first handover request response message sent by the MSC.

25. A mobile switching center MSC, comprising:
a receiving unit, configured to receive a first handover request message sent by a mobility management entity MME, wherein the first handover request message is used to request the MSC to hand over a user equipment UE from a Long Term Evolution LTE network to a circuit switched CS domain of a 2G or 3G network for circuit switched fallback CSFB;
a generating unit, configured to generate a third handover request message according to the first handover request message received by the receiving unit, wherein the third handover request message is used to request a base station of the 2G or 3G network to hand over the UE from the LTE network to the CS domain of the 2G or 3G network for the CSFB; and
a sending unit, configured to send, to the base station, the third handover request message generated by the generating unit; wherein
the receiving unit is further configured to receive a third handover request acknowledgement message sent by the base station; and
the receiving unit is further configured to receive a handover complete message sent by the base station, wherein the handover complete message is used to indicate that the UE has completed the handover from the LTE network to the CS domain of the 2G or 3G network.

26. The MSC according to claim 25, wherein
the receiving unit is further configured to receive a first CS call connection request message sent by the UE; and
the generating unit is further configured to generate a first session for the UE.

27. The MSC according to claim 25, wherein
the sending unit is further configured to send, to the UE, a second CS call connection request message generated by the generating unit, wherein the second CS call connection request message is used to request the UE to generate a second session.

28. The mobile switching center according to claim 26, wherein
the receiving unit is further configured to receive a connection management service request message sent by the UE and/or a paging response message sent by the UE; and
the sending unit is further configured to send a second notification message generated by the generating unit to the base station after the receiving unit receives at least one of the following messages, wherein the second notification message is used to request the base station to allocate a CS domain resource to the UE, and the following messages comprise: the handover complete message, the connection management service request message sent by the UE, the first CS call connection request message, and the paging response message sent by the UE.

29. The MSC according to claim 27, wherein
the sending unit is further configured to send a second notification message generated by the generating unit to the base station after sending the second CS call connection request message, wherein the second notification message is used to request the base station to allocate a CS domain resource to the UE.

30. Abase station of a 2G or 3G network, comprising:
a receiving unit, configured to receive a third handover request message sent by a mobile switching center MSC, wherein the third handover request message is used to request the base station to hand over a user equipment UE from a Long Term Evolution LTE network to a circuit switched CS domain of the 2G or 3G network for circuit switched fallback CSFB; and further configured to receive a fourth handover request message sent by a serving general packet radio service support node SGSN, wherein the fourth handover request message is used to request the base station to hand over the UE from the LTE network to a packet switched PS domain of the 2G or 3G network for the CSFB;
an allocating unit, configured to allocate a PS domain radio access bearer RAB to the UE according to the fourth handover request message received by the receiving unit, wherein the PS domain RAB is used to hand over the UE from the LTE network to the PS domain of the 2G or 3G network for the CSFB;
a generating unit, configured to: generate a third handover request acknowledgement message according to the third handover request message received by the receiving unit, and generate a fourth handover request acknowledgement message according to the fourth handover request message received by the receiving unit, wherein the fourth handover request acknowledgement message comprises the PS domain RAB; and
a sending unit, configured to: send, to the MSC, the third handover request acknowledgement message generated by the generating unit and send, to the SGSN, the fourth handover request acknowledgement message generated by the generating unit; wherein
the receiving unit is further configured to receive a handover complete message sent by the UE;
the allocating unit is further configured to allocate a CS domain RAB to the UE according to the third handover request message received by the receiving unit;
the generating unit is further configured to: generate a third notification message according to the handover complete message received by the receiving unit, to send the third notification message to the UE, wherein the third notification message comprises the CS domain RAB allocated by the allocating unit; and
the sending unit is further configured to send, to the UE, the third notification message generated by the generating unit.

31. The base station according to claim 30, wherein
the third handover request message is further used to indicate that the UE supports the handover from the LTE network to the PS domain of the 2G or 3G network.

32. The base station according to claim 30 or 31, wherein
the receiving unit is further configured to: receive a call setup message or a call acknowledgement message sent by the UE, or receive a call proceeding message sent by the MSC; and
the sending unit sends the third notification message to the UE after the receiving unit receives the call setup message or the call acknowledgement message sent by the UE, or after the receiving unit receives the call proceeding message sent by the MSC.

33. The base station according to any one of claims 30 to 32, wherein
the sending unit is further configured to: send universal mobile telecommunications system terrestrial radio access network UTRAN mobility information to the UE after the receiving unit receives the handover complete message, wherein the UTRAN mobility information does not comprise a location area identity LAI; and send the LAI to the UE after a preset time.

34. The base station according to claim 30 or 31, wherein the sending unit is further configured to send universal mobile telecommunications system terrestrial radio access network UTRAN mobility information to the UE after the receiving unit receives the handover complete message, wherein the UTRAN mobility information does not comprise a location area identity LAI;
the receiving unit is further configured to receive a call release command sent by the MSC, a call connection success message sent by the MSC, or a call connection success message sent by the UE; and
the sending unit is further configured to send the LAI to the UE after the receiving unit receives the call release command or the call connection success message.

35. The base station according to any one of claims 30 to 34, wherein
the receiving unit is further configured to receive a location update request message sent by the UE;
the base station further comprises a determining unit, wherein the determining unit is configured to determine not to send the location update request message to the MSC; and
the sending unit is further configured to send a location update accept message to the UE.

36. The base station according to any one of claims 30 to 35, wherein
the receiving unit is further configured to receive a call release message sent by the MSC; and
the base station further comprises a redirecting unit or a handover unit, wherein the redirecting unit is configured to redirect the UE to the LTE network according to the call release message; and
the handover unit is configured to hand over the UE to the LTE network according to the call release message.

37. An evolved NodeB eNB, comprising:
a receiving unit, configured to receive a first notification message sent by a mobility management entity MME, wherein the first notification message is used to instruct the eNB to move a user equipment UE from a Long Term Evolution LTE network to a 2G or 3G network for circuit switched fallback CSFB;
a generating unit, configured to generate a handover requirement message according to the first notification message received by the receiving unit, wherein the handover requirement message is used to request the MME to hand over the UE from the LTE network to a circuit switched CS domain of the 2G or 3G network for the CSFB; and
a sending unit, configured to send, to the MME, the handover requirement message generated by the generating unit; wherein
the receiving unit is further configured to receive a handover requirement response message sent by the MME, wherein the handover requirement response message comprises a packet switched PS domain radio access bearer RAB, and the PS domain RAB is used to hand over the UE from the LTE network to a PS domain of the 2G or 3G network for the CSFB;
the generating unit is further configured to generate a handover command according to the first notification message received by the receiving unit, wherein the handover command comprises the PS domain RAB; and
the sending unit is further configured to send, to the UE, the handover command generated by the generating unit.

38. The evolved NodeB according to claim 37, wherein
the first notification message is further used to indicate that the LTE network and the 2G or 3G network support the handover of the UE from the LTE network to the CS domain of the 2G or 3G network for the CSFB.

39. The evolved NodeB according to claim 37 or 38, wherein
the handover requirement message comprises first indication information, wherein the first indication information is used to instruct the MME to hand over the UE from the LTE network to the CS domain of the 2G or 3G network for the CSFB, or the first indication information is used to request the MME to hand over the UE from the LTE network to the CS domain of the 2G or 3G network for the CSFB and is used to indicate that the UE supports the handover from the LTE network to the PS domain of the 2G or 3G network; or
a source-to-target container in the handover requirement message comprises second indication information, wherein the second indication information is used to request a base station of the 2G or 3G network to hand over the UE from the LTE network to the CS domain of the 2G or 3G network for the CSFB; or
a source-to-target container in the handover requirement message comprises second indication information, wherein the second indication information is used to request a base station of the 2G or 3G network to hand over the UE from the LTE network to the CS domain of the 2G or 3G network for the CSFB and is used to indicate that the UE supports the handover from the LTE network to the PS domain of the 2G or 3G network.

40. The evolved NodeB according to any one of claims 37 to 39, wherein the evolved NodeB further comprises:
a determining unit, configured to: before the sending unit sends the handover requirement message to the MME, determine that the UE supports the handover from the LTE network to the PS domain of the 2G or 3G network; and/or before the sending unit sends the handover command to the UE, determine that the UE supports the handover from the LTE network to the PS domain of the 2G or 3G network.

41. A network handover system, comprising a mobility management entity, an evolved NodeB, a mobile switching center, a base station, and a user equipment, wherein
the mobility management entity is the mobility management entity according to any one of claims 21 to 24;
the mobile switching center is the mobile switching center according to any one of claims 25 to 29;
the base station is the base station according to any one of claims 30 to 36; and the evolved NodeB is the evolved NodeB according to any one of claims 37 to 40.
